(19) Europäisches Patentamt / European Patent Office / Office européen des brevets

(11) **EP 1 408 386 B1**

(12) **EUROPÄISCHE PATENTSCHRIFT**

(45) Veröffentlichungstag und Bekanntmachung des Hinweises auf die Patenterteilung:
**29.10.2008 Patentblatt 2008/44**

(51) Int Cl.:
***G05B 19/408*** *(2006.01)*

(21) Anmeldenummer: 03019220.7

(22) Anmeldetag: **26.08.2003**

(54) **Verfahren und Vorrichtung zur Datenübertragung zwischen einer Verarbeitungseinheit und mehreren Positionsmesseinrichtungen**

Method and device for the transfer of data between a processing unit and several measuring devices

Procédé et dispositif de transfer de données entre une unité de traitement et plusieurs capteurs de position

(84) Benannte Vertragsstaaten:
**AT BE BG CH CY CZ DE DK EE ES FI FR GB GR HU IE IT LI LU MC NL PT RO SE SI SK TR**

(30) Priorität: **01.10.2002 DE 10245905**

(43) Veröffentlichungstag der Anmeldung:
**14.04.2004 Patentblatt 2004/16**

(73) Patentinhaber: **Dr. Johannes Heidenhain GmbH 83292 Traunreut (DE)**

(72) Erfinder: **Bratzdrum, Erwin 83359 Hallabruck (DE)**

(56) Entgegenhaltungen:
**DE-A1- 4 407 571        DE-A1- 10 030 357
DE-A1- 10 030 358     DE-A1- 19 950 869
US-A- 4 982 185**

**Beschreibung**

Die vorliegende Erfindung betrifft ein Verfahren sowie eine Vorrichtung zur Datenübertragung zwischen einer Verarbeitungseinheit und mehreren Positionsmesseinrichtungen, die in einer Linienbus-Topologie miteinander verbunden sind.

Aus der DE 100 30 358 A1 der Anmelderin ist ein Verfahren sowie eine Vorrichtung zur seriellen Datenübertragung zwischen einer Verarbeitungseinheit und einer Positionsmesseinrichtung bekannt. Hierbei werden über eine digitale Schnittstelle binäre Datenwörter in einem kontinuierlichen Datenstrom auf zwei Datenkanälen zwischen der Verarbeitungseinheit und der Positionsmesseinrichtung ausgetauscht. In Verbindung mit dieser digitalen Schnittstelle sei ferner die DE 100 30 357 A1 erwähnt, in der bestimmte Maßnahmen vorgeschlagen werden, die insbesondere hinsichtlich eines möglichst zeitdeterminierten Erfassens von Positionsdaten bzw. Einspeicherns von Positionsdaten in der Positionsmesseinrichtung von Bedeutung sind.

Das in diesen Druckschriften offenbarte Konzept einer digitalen, seriellen Schnittstelle ist grundsätzlich nicht auf eine bestimmte Schnittstellen-Physik beschränkt, sondern lässt sich in Verbindung mit verschiedenen Varianten und Ausführungsformen bekannter Schnittstellen-Technologien realisieren.

In den Druckschriften ist explizit jeweils nur eine sog. Punkt-zu-Punkt-Verbindung zwischen einer einzigen Positionsmesseinrichtung und einer zentralen Verarbeitungseinheit - beispielsweise einer numerischen Werkzeugmaschinensteuerung - offenbart. Grundsätzlich lassen sich die erläuterten Maßnahmen jedoch auch in einer sog. Bustopologie einsetzen, bei der eine Verarbeitungseinheit mit mehreren Positionsmesseinrichtungen verbunden ist. Als Bustopologie kann etwa im Fall von geforderten hohen Datenübertragungsraten insbesondere eine Linienbus-Topologie vorgesehen sein, bei der die einzelnen Busteilnehmer über einzelne Punkt-zu-Punkt-Verbindungen miteinander verbunden sind. In Richtung der Verarbeitungseinheit werden hierbei Daten zwischen den verschiedenen Busteilnehmern nach dem Eimerkettenprinzip ausgetauscht werden. Unter Eimerkettenprinzip sei in diesem Zusammenhang die Übertragung von Daten eines Busteilnehmers zum jeweils benachbarten Busteilnehmer verstanden.

In der Praxis resultieren in derartigen Bustopologien signifikante, unterschiedliche Signallaufzeiten zwischen den verschiedenen Positionsmesseinrichtungen und der Verarbeitungseinheit. Die Signallaufzeiten sind hierbei auf die erforderlichen Laufzeiten in den Verbindungsleitungen sowie die benötigten Verarbeitungszeiten in den einzelnen Positionsmesseinrichtungen zurückzuführen, durch die aufgrund des oben erwähnten Übertragungsprinzips die Daten im Verlauf der Übertragung durchzuschleifen sind.

Ohne weitere Zusatzmaßnahmen kann insbesondere keine zeitdeterminierte - respektive gleichzeitige - Messwerterfassung durch alle Positionsmesseinrichtungen erfolgen. Für die präzise Weiterverarbeitung der Positionsdaten stellt die definierte bzw. möglichst gleichzeitige Messwerterfassung bzw. Abarbeitung von Positionsdaten-Anforderungssignalen jedoch eine grundlegende Voraussetzung dar.

Aus der US 4,982,185 ist desweiteren ein System zur zeitsynchronen Messung in einem Rechner-Netzwerk bekannt. Das System umfasst hierbei mehrere Master und Slaves in einer Ringbus-Anordnung. Um sicherzustellen, dass alle Messungen auf Seiten der Slaves zeitsynchron erfolgen, ist vorgesehen, jedem Slave eine bestimmte laufzeitabhängige Verzögerungszeit zuzuweisen. Nach dem Initiierten einer Messung durch den Master können dann alle Slaves zur gleichen Zeit einen Messwert erfassen. Über dieses Vorgehen können laufzeitabhängige Verzögerungseffekte in der Ringbus-Anordnung für weniger zeitkritische Anwendungen kompensiert werden. Die vorgeschlagenen Maßnahmen sind jedoch noch nicht ausreichend, in zeitkritischen Anwendungen, wie etwa bei der Lageerfassung für Maschinensteuerungen, eine hinreichende Zeitsynchronität aller erfolgenden Positionsmessungen zu gewährleisten.

Aufgabe der vorliegenden Erfindung ist es daher, ein Verfahren sowie eine Vorrichtung zur Datenübertragung zwischen einer Verarbeitungseinheit und mehreren Positionsmesseinrichtungen anzugeben, die in einer Linienbus-Topologie miteinander verbunden sind und wobei sichergestellt ist, dass die Erfassung von Positionsdaten in den Positionsmesseinrichtungen stets zu definierten Zeitpunkten erfolgt.

Diese Aufgabe wird gelöst durch ein Verfahren mit den Merkmalen des Anspruches 1.

Vorteilhafte Ausführungsformen des erfindungsgemäßen Verfahrens ergeben sich aus den Maßnahmen, die in den von Anspruch 1 abhängigen Patentansprüchen aufgeführt sind.

Ferner wird die oben aufgeführte Aufgabe durch eine Vorrichtung mit den Merkmalen des Anspruches 13 gelöst.

Vorteilhafte Ausführungsformen der erfindungsgemäßen Vorrichtung ergeben sich aus den Maßnahmen, die in den von Anspruch 13 abhängigen Patentansprüchen aufgeführt sind.

Die erfindungsgemäßen Maßnahmen gewährleisten nunmehr, dass auch bei einer Bustopologie im Fall der angeforderten Positionsdatenerfassung stets zu definierten Zeitpunkten die Positionsdaten bzw. Positionsmesswerte in der Positionsmesseinrichtung erfasst, respektive eingespeichert werden. Eine zuverlässige Weiterverarbeitung der an die Verarbeitungseinheit übermittelten Positionsdaten ist somit sichergestellt.

Weitere Vorteile sowie Einzelheiten der vorliegenden Erfindung ergeben sich aus der nachfolgenden Beschreibung der beiliegenden Figuren.

Dabei zeigt

Figur 1          ein schematisiertes Blockschaltbild einer ersten Ausführungsform der erfindungsgemäßen Vorrichtung;

Figur 2          ein schematisiertes Blockschaltbild einer zweiten Ausführungsform der erfindungsgemäßen Vorrichtung;

Figur 3a - 3d    jeweils ein Signaldiagramm zur beispielhaften Erläuterung des erfindungsgemäßen Verfahrens.

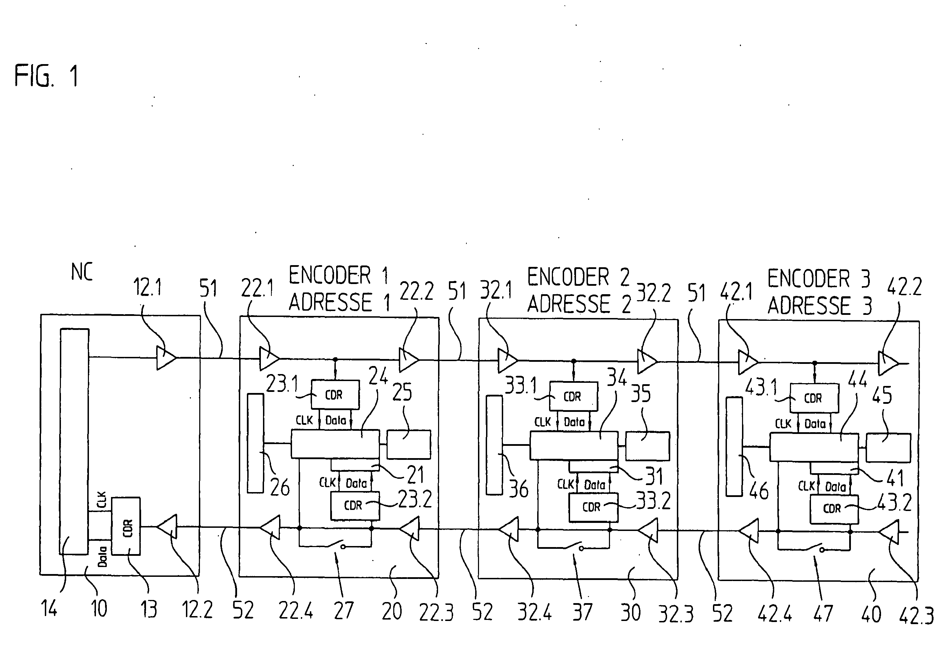

In Figur 1 ist in schematischer Form ein Blockschaltbild einer ersten Ausführungsform der erfindungsgemäßen Vorrichtung dargestellt. Die dargestellte Variante umfasst neben einer Verarbeitungseinheit 10 insgesamt drei weitere Positionsmesseinrichtungen 20, 30, 40, die in einer an sich bekannten Linienbus-Topologie miteinander verbunden sind. In einer möglichen Anwendung kann es sich bei der Verarbeitungseinheit 10 (NC) beispielsweise um eine numerische Werkzeugmaschinensteuerung handeln, während die Positionsmesseinrichtungen 20, 30, 40 (ENCODER 1, ENCODER 2, ENCODER 3) in bekannter Art und Weise als inkrementale oder absolute Positionsmesssysteme ausgebildet sind, die beispielsweise Positionsdaten an verschiedenen Maschinenachsen erfassen und zur Weiterverarbeitung an die Verarbeitungseinheit 10 übertragen.

In Bezug auf die grundsätzliche Art und Weise der Datenübertragung zwischen der Verarbeitungseinheit 10 und den Positionsmesseinrichtungen 20, 30, 40 sei an dieser Stelle nicht im Detail eingegangen, sondern ausdrücklich auf die bereits oben erwähnten Druckschriften DE 100 30 358 A1 und DE 100 30 357 A1 verwiesen.

Im dargestellten Beispiel ist eine Bustopologie in Form einer Linienbus-Topologie dergestalt vorgesehen, dass unmittelbar mit der Verarbeitungseinheit 10 lediglich die erste der insgesamt drei vorgesehenen Positionsmesseinrichtungen analog zur Konfiguration aus den beiden genannten Druckschriften verbunden ist und über die Datenkanäle 51, 52 Daten austauscht. Über den ersten Datenkanal 51 erfolgt hierbei die Übertragung von Daten von der Verarbeitungseinheit 10 in Richtung der ersten Positionsmesseinrichtung 20, über den zweiten Datenkanal 52 erfolgt die Übertragung von Daten von der ersten Positionsmesseinrichtung 20 in Richtung der Verarbeitungseinheit 10.

Seriell bzw. in Linie mit der ersten Positionsmesseinrichtung 20 ist die zweite vorgesehene Positionsmesseinrichtung 30 verbunden, mit dieser wiederum ist seriell die dritte Positionsmesseinrichtung 40 verbunden; selbstverständlich kann diese Konfiguration um weitere Positionsmesseinrichtungen ergänzt werden, die dann ebenfalls in serieller Form mit der dritten Positionsmesseinrichtung 40 verbunden werden usw.. Zwischen benachbarten Busteilnehmern ist somit jeweils eine Punkt-zu-Punkt-Verbindung vorgesehen; für jede Übertragungsrichtung dient ein separater Datenkanal 51, 52.

Aus der Linienbus-Topologie wiederum resultiert eine bestimmte Art und Weise der Datenübertragung zwischen der Verarbeitungseinheit 10 und den Positionsmesseinrichtungen 20, 30, also insbesondere mit den zweiten, dritten etc. Positionsmesseinrichtungen 20, 30. So ist vorgesehen, die beispielsweise von der zweiten Positionsmesseinrichtung 30 zur Verarbeitungseinheit 10 zu übertragenden Daten jeweils durch die erste Positionsmesseinrichtung 20 durchzuschleifen. Dies erfolgt in bekannter Art und Weise in Form einer Zwischenspeicherung der Daten in einem Zwischenspeicher 21 der ersten Positionsmesseinrichtung 20. Analog hierzu erfolgt die Datenübertragung von der noch weiter von der Verarbeitungseinheit 10 entfernten dritten Positionsmesseinrichtung 40 und ggf. weiterer Positionsmesseinrichtungen zur Verarbeitungseinheit 10. In Richtung der Verarbeitungseinheit 10 zu übertragende Daten werden jeweils nur zur unmittelbar benachbarten Positionsmesseinrichtung übertragen, die näher an der Verarbeitungseinheit 10 platziert ist. Um diese Art der Datenübertragung in Richtung der Verarbeitungseinheit 10 zu ermöglichen, weist jede Positionsmesseinrichtung 20, 30, 40 einen entsprechenden Zwischenspeicher 21, 31, 41 auf. Nachfolgend sei diese Art der Datenübertragung in der gewählten Linienbus-Topologie als Eimerkettenprinzip bezeichnet.

Um eine definierte Datenübertragung zu bestimmten Positionsmesseinrichtungen 20, 30, 40 zu ermöglichen und um eine korrekte Weiterverarbeitung der von den verschiedenen Positionsmesseinrichtungen 20, 30, 40 empfangenen Daten sicherzustellen, ist in bekannter Art und Weise eine Adressierbarkeit der verschiedenen Positionsmesseinrichtungen 20, 30, 40 in der Linienbus-Topologie vorgesehen. Dies sei durch die jeweiligen Adressen "ADRESSE 1 ", "ADRESSE 2", "ADRESSE 3" angedeutet, die den verschiedenen Positionsmesseinrichtungen 20, 30, 40 in Figur 1 zugeordnet sind.

Über den ersten Datenkanal 51 erfolgt demzufolge in der erläuterten Art und Weise eine Übertragung von Daten von der Verarbeitungseinheit 10 in Richtung der eingesetzten Positionsmesseinrichtungen 20, 30, 40; über den zweiten Datenkanal 52 werden analog hierzu Daten in serieller Form als binäre Datenwörter in einem kontinuierlichen Datenstrom von den einzelnen Positionsmesseinrichtungen 20, 30, 40 in Richtung der Verarbeitungseinheit 10 übertragen.

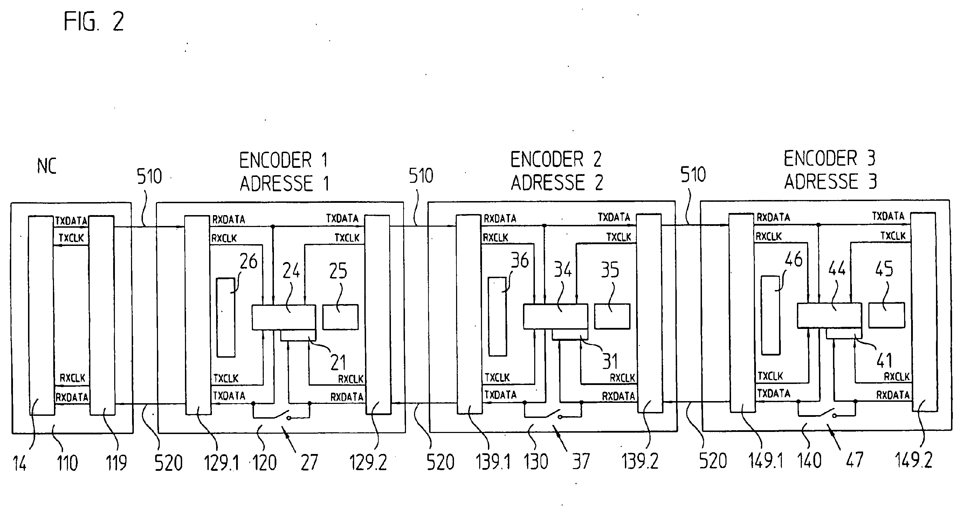

Als konkrete Schnittstellenphysik wird im vorliegenden Beispiel zur Datenübertragung eine sog. LVDS-Schnittstelle (Low Voltage Differential Signalling) zur Datenübertragung verwendet; wie aus dem nachfolgend noch zu erläuternden zweiten Beispiel in Figur 2 ersichtlich wird, ist die jeweilige Schnittstellenphysik jedoch nicht wesentlich für die vorliegende Erfindung. Es kann an dieser Stelle auch eine alternative Schnittstellen-Physik bzw. Schnittstellen-Hardware zum Einsatz kommen.

Spezifisch für die gewählte Schnittstellenphysik in Form einer LVDS-Schnittstelle sind im vorliegenden Beispiel die auf Seiten der Verarbeitungseinheit 10 und der Positionsmesseinrichtungen vorgesehenen Leitungstreiber 12.1, 12.2, 22.1 - 22.4, 32.1 - 32.4, 42.1 - 42.4 sowie die Takt-/Daten-Rückgewinnungs-Bausteine 13, 23.1, 23.2, 33.1, 33.2, 43.1, 43.2, die in bekannter Art und Weise zur Datenübertragung in der LVDS-Schnittstelle eingesetzt werden.

Sowohl auf Seiten der Verarbeitungseinheit 10 wie auch auf Seiten der Positionsmesseinrichtungen 20, 30, 40 sind ferner Protokoll bausteine 14, 24, 34, 44 vorgesehen, die die übertragenen bzw. die zu übertragenden Daten dem Übertragungsprotokoll entsprechend aufbereiten.

In den Positionsmesseinrichtungen 20, 30, 40 ist ferner jeweils ein Speicher 25, 35, 45 - beispielsweise ausgebildet als EEPROM - angeordnet, dessen Funktion im Verlauf der weiteren Beschreibung noch näher erläutert wird. Ebenso wird die Funktion von Schaltelementen 27, 37, 47, die ebenfalls den Positionsmesseinrichtungen 20, 30, 40 zugeordnet sind, nachfolgend noch näher erläutert.

Lediglich als schematischer Funktionsblock 26, 36, 46 sind auf Seiten der Positionsmesseinrichtungen 20, 30, 40 jeweils noch die erforderlichen Mittel zur Messwerterfassung dargestellt, nachfolgend als Messwert-Erfassungsmittel bezeichnet; hierbei handelt es beispielsweise um die Elemente der jeweiligen Positionsmesseinrichtung 20, 30, 40, die zur Erzeugung der Positionsdaten erforderlich sind, wie etwa eine Messteilung und eine Abtasteinheit usw.. Die Messwert-Erfassungsmittel 26, 36, 46 können hierbei wiederum beliebig ausgebildet sein und sind nicht erfindungswesentlich; beispielsweise können darüber Inkrementalsignale oder aber Absolutsignale generiert werden, ebenso können selbstverständlich unterschiedlichste physikalische Prinzipien zur Messwerterzeugung an dieser Stelle eingesetzt werden usw..

Eine zweite Variante einer erfindungsgemäßen Vorrichtung ist in Figur 2 schematisiert dargestellt, bei der wiederum eine Verarbeitungseinheit 110 (NC) mit drei Positionsmesseinrichtungen 120, 130, 140 (ENCODER 1, ENCODER 2, ENCODER3) in einer linienförmigen Bustopologie verbunden sind. Unterschiedlich zur ersten beschriebenen Variante ist in diesem Beispiel lediglich die verwendete Schnittstellen-Hardware respektive Schnittstellen-Physik ausgebildet, d.h. es wird nunmehr eine sog. Ethernet-Physik zur Datenübertragung eingesetzt. Spezifisch für die Ethernet-Physik sind in der Darstellung der Figur 2 nur die Kommunikationsbausteine 119, 129.1, 129.2, 139.1, 139.2, 149.1, 149.2 in Form sog. Ethernet-PHYs, die jeweils auf Seiten der Verarbeitungseinheit 110 und der Positionsmesseinrichtungen 120, 130, 140 angeordnet sind und den Datentransfer auf den beiden Datenkanälen 510, 520 in bekannter Art und Weise gewährleisten.

Die auf Seiten der Verarbeitungseinheit 110 und der Positionsmesseinrichtungen 120, 130, 140 ferner angeordneten Elemente und Komponenten entsprechen denjenigen aus dem ersten erläuterten Ausführungsbeispiel und seien an dieser Stelle nicht näher erläutert. Funktionsgleiche Elemente haben deshalb in Figur 2 die gleichen Bezugzeichen wie in Figur 1.

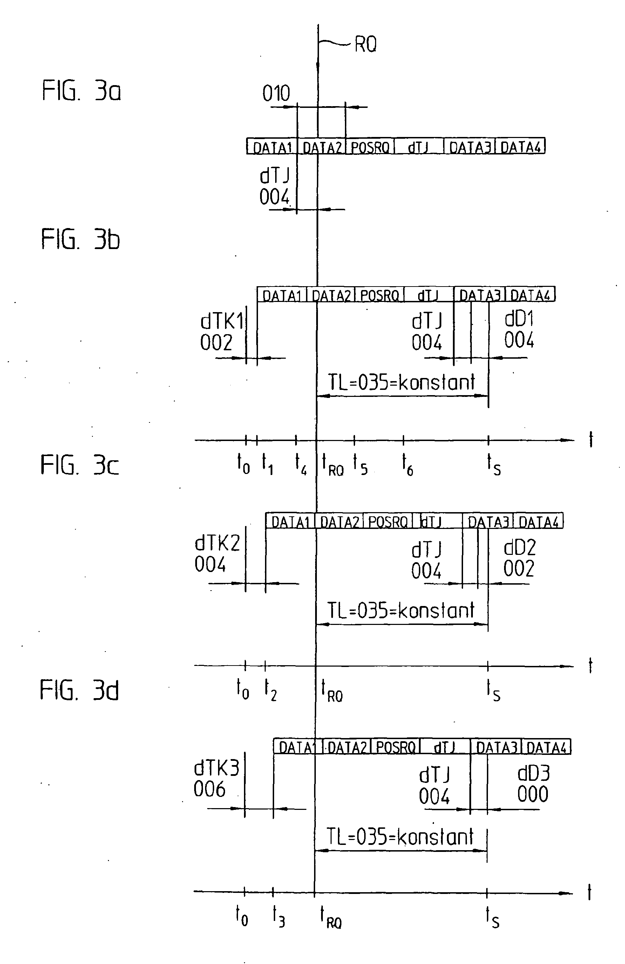

Anhand der Figuren 3a - 3d sei nachfolgend das erfindungsgemäße Verfahren anhand eines Beispieles im Detail erläutert, wobei im Verlauf der nachfolgenden Beschreibung bzgl. der entsprechenden Vorrichtung auf die Variante aus Figur 1 Bezug genommen wird. Grundsätzlich läuft das erfindungsgemäße Verfahren jedoch auch in Verbindung mit der Schnittstellen-Physik aus Figur 2 identisch ab.

Figur 3a zeigt den Verlauf der Übertragung von Daten auf dem ersten Datenkanal 51 von der Verarbeitungseinheit 10 aus in Richtung der verschiedenen Positionsmesseinrichtungen 20, 30, 40. In den Figuren 3b - 3d ist die Ankunft des von der Verarbeitungseinheit 10 übermittelten Datenstromes an den drei Positionsmesseinrichtungen 20, 30, 40 inklusive der dann ablaufenden Prozesse veranschaulicht.

Zum Zeitpunkt $t_0$ beginnt die Verarbeitungseinheit 10 mit der Übertragung eines ersten digitalen Datenwortes DATA1 an die weiteren Busteilnehmer bzw. Positionsmesseinrichtungen 20, 30, 40. Im vorliegenden Beispiel werden zwischen den verschiedenen Busteilnehmern digitale Datenwörter DATA1 - DATA4 mit einer Wortlänge von 10 Bit ausgetauscht; grundsätzlich wäre selbstverständlich auch möglich, andere Wortlängen vorzusehen. Als Zeitdauer dDATA für die Übertragung eines derartigen Datenwortes DATA1 - DATA4 sei beispielhaft dDATA = 010 angenommen. Die Zeitdauer dDATA als auch die weiteren Zeitdauern werden im Verlauf der weiteren Beschreibung ohne konkrete Zeit-Einheiten angegeben und dienen lediglich der beispielhaften Veranschaulichung.

Wie aus Figur 3b ersichtlich, trifft das erste Datenwort DATA1 zum Zeitpunkt $t_1$ an der Positionsmesseinrichtung 20 ein, die in der Linienbus-Topologie gemäß Figur 1 die kürzeste Entfernung zur Verarbeitungseinheit 10 besitzt. Die erforderliche Zeitdauer dTK1 = 002 zwischen den Zeitpunkten $t_0$ und $t_1$ beruht auf der endlichen Signallaufzeit des Datenwortes DATA1 auf den Signalleitungen des Datenkanales 51. Diese Zeitdauer sei nachfolgend als Signallaufzeit dTK1 bezeichnet.

Analog hierzu ist aus den Figuren 3c und 3d ersichtlich, dass das entsprechende Datenwort DATA1 jeweils nochmals um die Signallaufzeiten dTK2 = 004 bzw. dTK3 = 006 zu den Zeitpunkten $t_2$ bzw. $t_3$ verzögert an den beiden noch weiter entfernten Positionsmesseinrichtungen 30, 40 eintrifft. Im Fall der Signallaufzeiten dTK2, dTK3 machen sich hierbei nicht nur die reinen - nicht mehr vernachlässigbaren - Laufzeiten auf den entsprechenden Verbindungsleitungen des Datenkanales 51 bemerkbar, es kommen hierzu noch die Signalverarbeitungszeiten hinzu, die beim Durchschleifen der übertragenen Daten durch die jeweils vorhergehenden Positionsmesseinrichtungen 10 bzw. 10, 20 in der Linienbus-Topologie anfallen.

Nach der Übertragung des ersten Datenwortes DATA1 beginnt zum Zeitpunkt $t_4$ die Übertragung eines weiteren Datenwortes DATA2 an die Positionsmesseinrichtungen 20, 30, 40. Im Verlauf der Übertragung des zweiten Datenwortes DATA2 von der Verarbeitungseinheit 10 an die Positionsmesseinrichtungen 20, 30, 40 tritt zum Zeitpunkt $t_{RQ}$ auf Seiten der Verarbeitungseinheit 10 ein Positionsdaten-Anforderungssignal RQ auf, über das etwa von einer übergeordneten Regelung möglichst umgehend aktuelle Positionsdaten von den verschiedenen Positionsmesseinrichtungen 20, 30, 40 angefordert werden sollen.

Die zum Zeitpunkt $t_{RQ}$ noch nicht abgeschlossene Übertragung des Datenwortes DATA2 wird daraufhin regulär beendet und erst zum Zeitpunkt $t_5$ mit der Übertragung eines Positionsdaten-Anforderungsbefehles in Form eines digitales 10-Bit Datenwortes POS_RQ von der Verarbeitungseinheit 10 an die Positionsmesseinrichtungen 20, 30, 40 begonnen.

Nach der Beendigung der Übertragung des Datenwortes POS_RQ mit dem Positionsdaten-Anforderungsbefehl zum Zeitpunkt $t_6$ schließt sich die Übertragung eines weiteren digitalen Datenwortes dTJ an. Dieses enthält eine zeitliche Lageinformation bzw. Zeitdifferenz bzgl. der relativen zeitlichen Lage des Positionsdaten-Anforderungssignales RQ während der Übertragung des ersten Datenwortes DATA1. Im vorliegenden Beispiel beträgt dTJ = 004. In Bezug auf diese übertragene Information sei an dieser Stelle ausdrücklich auf die bereits oben erwähnte DE 100 30 357 A1 verwiesen.

In den Positionsmesseinrichtungen 20, 30, 40 treffen die verschiedenen übertragenen Datenwörter DATA1, DATA2, POS_RQ, dTJ entsprechend um die Signallaufzeiten dTK1, dTK2, dTK3 verzögert ein, wie aus den Diagrammen in den Figuren 3b - 3d ersichtlich ist.

Um nunmehr insbesondere eine zeitgleiche Abarbeitung des Positionsdaten-Anforderungssignales RQ bzw. des entsprechend aufbereiteten Datenwortes POS_RQ in allen Positionsmesseinrichtungen 20, 30, 40 zum Zeitpunkt $t_s$ zu gewährleisten, ist für bzw. in jeder Positionsmesseinrichtung 20, 30, 40 ein spezifischer Verzögerungs-Korrekturwert dD1, dD2, dD3 zu berücksichtigen. Der jeweilige Verzögerungs-Korrekturwert dD1, dD2, dD3 resultiert aus den oben erwähnten Signallaufzeiten dTK1, dTK2, dTK3 und ggf. anfallenden Signalverarbeitungszeiten zu den unterschiedlichen Positionsmesseinrichtungen bzw. in den Positionsmesseinrichtungen und orientiert sich an der längsten Signallaufzeit dTK3 zur weitest entfernten Positionsmesseinrichtung 40. Wie aus Figur 3d ersichtlich, beträgt für diese Positionsmesseinrichtung 40 der entsprechende Verzögerungskorrekturwert dD3 = 000, d.h. es können in dieser Positionsmesseinrichtung 40 unmittelbar nach dem übertragenen Datenwort dTJ und der Zeitdifferenz dTJ = 004 zum Zeitpunkt $t_s$ die aktuellen Positionsdaten erfasst bzw. eingespeichert werden.

Für die beiden anderen Positionsmesseinrichtungen 20, 30, die entsprechend kürzere Signallaufzeiten aufweisen, muss demzufolge jeweils neben der Zeitdifferenz dTJ ein definierter Verzögerungskorrekturwert dD1 = 004 bzw. dD2 = 002 ab der Übertragung des Datenwortes dTJ berücksichtigt werden. Nur so ist sicherzustellen, dass zum jeweils gleichen Zeitpunkt $t_s$ die zeitgleiche Messwerterfassung bzw. Abarbeitung des Positionsdaten-Anforderungssignales RQ bzw. des entsprechenden Datenwortes POS_RQ erfolgt.

Nicht aus den Darstellungen der Figuren 3a - 3d ersichtlich ist, dass unmittelbar nach dem Zeitpunkt $t_s$, an dem zeitgleich die Messwerterfassung in den Positionsmesseinrichtungen 20, 30, 40 erfolgt, mit der Übertragung der ermittelten Positionsdaten in Richtung der Verarbeitungseinheit 10 durch alle Positionsmesseinrichtungen begonnen wird. Wie bereits oben erläutert, erfolgt während der Übertragung der Positionsdaten in Richtung der Verarbeitungseinheit 10 auf Basis des Eimerkettenprinzips eine Zwischenspeicherung in den Zwischenspeichern 21, 31, 41 der verschiedenen Positionsmesseinrichtungen 20, 30, 40.

Durch die Berücksichtigung der laufzeitabhängigen Verzögerungs-Korrekturwerte dD1, dD2, dD3 in der erläuterten Art und Weise resultiert demzufolge in allen Positionsmesseinrichtungen 20, 30, 40 eine identische bzw. konstante Verzögerungszeit TL = 035 zwischen dem Auftreten des Positionsdaten-Anforderungssignales RQ auf Seiten der Verarbeitungseinheit 10 und Abarbeitung des Positionsdaten-Anforderungssignales RQ in den Positionsmesseinrichtungen. Die oben erwähnten Anforderungen hinsichtlich des zeitgleichen Erfassens von Positionsdaten in allen Positionsmesseinrichtungen sind somit auch in einer Linienbus-Topologie erfüllt.

Um eine Berücksichtigung der verschiedenen Signallaufzeiten dTK1, dTK2, dTK3 bzw. der spezifischen Verzögerungs-Korrekturwerte dD1, dD2, dD3 in der erläuterten Form zu ermöglichen, ist es erforderlich, vor dem eigentlichen Messbetrieb des gesamten Systems in einer Initialisierungsphase die spezifischen Verzögerungs-Korrekturwerte dD1, dD2, dD3 zu ermitteln. Zu diesem Zweck wird über eine Laufzeitmessung die Signallaufzeit dTK1, dTK2, dTK3 die erforderliche Laufzeit inklusive eventuell resultierender Signalverarbeitungszeiten für jede Positionsmesseinrichtung ermittelt. Die Laufzeitmessung erfolgt hierbei in Form einer sog. Reflexionsmessung, d.h. es wird benötigte Laufzeit eines Signals bestimmt, das von der Verarbeitungseinheit 10 zu einer Positionsmesseinrichtung übertragen und wieder zurückgeschickt wird. In Bezug auf Detail einer geeigneten Laufzeitmessung sei an dieser Stelle ausdrücklich die noch nicht offengelegte Patentanmeldung DE 101 62 735.1 verwiesen.

Um eine definierte Laufzeitmessung zu jeder der Positionsmesseinrichtungen zu ermöglichen, weist innerhalb der erfindungsgemäßen Vorrichtung jede der vorgesehenen Positionsmesseinrichtungen ein zugeordnetes Schaltelement 27, 37, 47 im Signalpfad des zweiten Datenkanals 52 auf. Mithilfe dieser Schaltelemente 27, 37, 47 ist es während der jeweiligen Laufzeitmessung möglich, einen definierten Signalpfad unter Umgehung einer Zwischenspeicherung in der jeweiligen Positionsmesseinrichtung 20, 30, 40 zu schalten.

Im Fall der Laufzeitmessung zum ersten Positionsmesseinrichtung 20 ist demzufolge das zugehörige Schaltelement 27 der ersten Positionsmesseinrichtung 20 zu schließen, während die anderen Schaltelemente 37, 47 geöffnet bleiben, um einen Signalpfad für die Laufzeitmessung bzw. die Bestimmung der Signallaufzeit dTK1 zu schalten. Soll die Signallaufzeit dTK2 zur zweiten Positionsmesseinrichtung 30 bestimmt werden, sind die Schaltelemente 27 und 37 zu schließen, während das Schaltelement 47 geöffnet bleibt, um so einen Signalpfad für die Laufzeitmessung in Form einer Reflexionsmessung zu ermöglichen etc..

In Abhängigkeit der derart ermittelten Signallaufzeit dTK1, dTK2, dTK3 für die betreffende Positionsmessseinrichtung 20, 30, 40 wird dann der entsprechende Verzögerungskorrekturwert dD1, dD2, dD3 bestimmt. Dies erfolgt wie erläutert dergestalt, dass für alle Positionsmesseinrichtungen 20, 30, 40 eine zeitgleiche Abarbeitung des Positionsdaten-Anforderungssignals RQ möglich ist. Die Bestimmung des entsprechenden Verzögerungskorrekturwertes dD1, dD2, dD3 orientiert sich hierbei wie oben beschrieben an der jeweils längsten ermittelten Signallaufzeit zwischen der Verarbeitungseinheit 10 und einem Busteilnehmer bzw. Positionsmesseinrichtung 20, 30, 40. Konkret erfolgt die Bestimmung des jeweiligen Verzögerungskorrekturwertes im Beispiel folgendermaßen:

$$dD1 = dTK3 - dTK1 = 004$$

$$dD2 = dTK3 - dTK2 = 002$$

$$dD3 = dTK3 - dTK3 = 000$$

In allgemeiner Form ergibt sich für den Verzögerungskorrekturwert dDn der n-ten Positionsmesseinrichtung demzufolge:

$$dDn = dTKmax - dDTn,$$

mit:

dDn := spezifischer Verzögerungskorrekturwert der n-ten Positionsmesseinrichtung
dTKmax := maximale Signallaufzeit zu einer Positionsmesseinrichtung in der Bustopologie

dTKn := Signallaufzeit der n-ten Positionsmesseinrichtung

Die sich derart ergebende Verzögerungszeit TL zwischen dem Auftreten des Positions-Anforderungssignals RQ zum Zeitpunkt $t_{RQ}$ und dem Zeitpunkt $t_s$, zu dem eine Abarbeitung dieses Befehles erfolgt, setzt sich in additiver Form aus der benötigten Zeitdauer zur Übertragung einer definierten, minimalen Anzahl digitaler Datenwörter, d.h. der Datenwörter DATA2, POS_Q, dTJ und der Zeitdauer des Verzögerungskorrekturwertes dD1, dD2, dD3 zusammen.

Der ermittelte spezifische Verzögerungs-Korrekturwert dD1, dD2, dD3 wird nach der erfolgten Laufzeitmessung für alle Positionsmesseinrichtungen 20, 30, 40 dann in einem Speicher 25, 35, 45 der jeweiligen Positionsmesseinrichtung 20, 30, 40 abgelegt und steht dort zur Verwendung in der erläuterten Art und Weise im eigentlichen Messbetrieb zur Verfügung. In einer möglichen Ausführungsform ist ein derartiger Speicher 25, 35, 45 etwa als EEPROM ausgebildet.

Um eine derartige Berücksichtigung spezifischer Verzögerungs-Korrekturwerte dD1, dD2, dD3 in der erläuterten Art und Weise zu ermöglichen, umfasst die erfindungsgemäße Vorrichtung bzw. die entsprechenden Positionsmesseinrichtungen demzufolge jeweils geeignete Korrektur-Mittel. Die Korrektur-Mittel umfassen u.a. jeweils die Speicher 25, 35, 45, in denen die Verzögerungs-Korrekturwerte dD1, dD2, dD3 abgelegt sind.

Im Rahmen der vorliegenden Erfindung existieren neben den erläuterten Ausführungsbeispielen selbstverständlich noch alternative Varianten.

**Patentansprüche**

1. Verfahren zur Datenübertragung zwischen einer Verarbeitungseinheit (10; 110) und mehreren Positionsmesseinrichtungen (20, 30, 40; 120, 130, 140), die in einer Linienbus-Topologie miteinander verbunden sind, wobei zur zeitgleichen Abarbeitung eines Positionsdaten-Anforderungssignals (RQ) in den Positionsmesseinrichtungen (20, 30, 40; 120, 130, 140) jeweils für jede Positionsmesseinrichtung (20, 30, 40; 120, 130, 140) ein spezifischer laufzeitabhängiger Verzögerungs-Korrekturwert (dD1, dD2, dD3) berücksichtigt wird, so dass ab dem Auftreten eines Positionsdaten-Anforderungssignals (RQ) auf Seiten der Verarbeitungseinheit (10; 110) im Verlauf der Übertragung eines Datenwortes (DATA2) bis zur zeitgleichen Abarbeitung der Positionsdaten-Anforderungssignals (RQ) in allen Positionsmesseinrichtungen (20, 30, 40; 120, 130, 140) die jeweils gleiche Verzögerungszeit (TL) resultiert, wobei in die Verzögerungszeit (TL) neben dem laufzeitabhängigen Verzögerungs-Korrekturwert (dD1, dD2, dD3) ferner eine zeitliche Lageinformation (dTJ) bzgl. der relativen zeitlichen Lage des Positionsdaten-Anforderungssignals (RQ) während der Übertragung des Datenwortes (DATA2) eingeht.

2. Verfahren nach Anspruch 1, wobei der spezifische Verzögerungs-Korrekturwert (dD1, dD2, dD3) für die betreffende Positionsmesseinrichtung (20, 30, 40; 120, 130, 140) in Abhängigkeit der Signallaufzeit (dTK1, DTK2, dTK3) zwischen der Verarbeitungseinheit (10; 110) und der betreffenden Positionsmesseinrichtung (20, 30, 40; 120, 130, 140) gewählt wird.

3. Verfahren nach Anspruch 2, wobei der spezifische Verzögerungs-Korrekturwert (dD1, dD2, dD3) jeder Positionsmesseinrichtung (20, 30, 40; 120, 130, 140) vor dem Messbetrieb in einer Initialisierungsphase ermittelt wird.

4. Verfahren nach Anspruch 3, wobei der jeweils ermittelte Verzögerungs-Korrekturwert (dD1, dD2, dD3) in einem Speicher (25, 35, 45; 125, 135, 145) abgelegt wird, der der jeweiligen Positionsmesseinrichtung (20, 30, 40; 120, 130, 140) zugeordnet ist.

5. Verfahren nach Anspruch 2, wobei der jeweilige Verzögerungs-Korrekturwert (dD1, dD2, dD3) in Abhängigkeit aller ermittelten Signallaufzeiten (dTK1, dTK2, dTK2) derart bestimmt wird, dass für alle Positionsmesseinrichtungen (20, 30, 40; 120, 130, 140) eine zeitgleiche Abarbeitung eines Positionsdaten-Anforderungssignals (RQ) möglich ist.

6. Verfahren nach Anspruch 1, wobei sich die Verzögerungszeit (TL) additiv aus der Zeitdauer zur Übertragung einer definierten, minimalen Anzahl digitaler Datenwörter (DATA2, POS_Q, dTJ) und der zugehörigen Zeitdauer des Verzögerungskorrekturwertes (dD1, dD2, dD3) zusammensetzt.

7. Verfahren nach Anspruch 1, wobei die Übertragung von Daten in der Linienbus-Topologie von den Positionsmesseinrichtungen (20, 30, 40; 120, 130, 140) zur Verarbeitungseinheit (10; 100) nach dem Eimerketten-Prinzip erfolgt.

8. Verfahren nach Anspruch 1, wobei unmittelbar nach der Abarbeitung des Positionsdaten-Anforderungssignals (RQ) in den Positionsmesseinrichtungen (20, 30, 40; 120, 130, 140) die ermittelten Positionsdaten in Richtung der Verarbeitungseinheit (10; 110) übertragen werden.

9. Verfahren nach Anspruch 7 und 8, wobei während der Übertragung der Positionsdaten eine Zwischenspeicherung der Positionsdaten in Zwischenspeichern (21, 31, 41; 121, 131, 141) der einzelnen Positionsmesseinrichtungen (20, 30, 40; 120, 130, 140) erfolgt.

10. Verarbeitungseinheit, geeignet zur Durchführung eines Verfahrens nach einem der Ansprüche 1 - 9.

11. Positionsmesseinrichtung, geeignet zur Durchführung eines Verfahrens nach einem der Ansprüche 1 - 9.

12. System, bestehend aus einer Verarbeitungseinheit und mehreren damit in einer Linienbus-Topologie verbundenen Positionsmesseinrichtungen, geeignet zur Durchführung eines Verfahrens nach einem der Ansprüche 1 - 9.

13. Vorrichtung zur Datenübertragung zwischen einer Verarbeitungseinheit (10; 110) und mehreren Positionsmesseinrichtungen (20, 30, 40; 120, 130, 140), die in einer Linienbus-Topologie miteinander verbunden sind, wobei zur zeitgleichen Abarbeitung eines Positionsdaten-Anforderungssignals (RQ) die Positionsmesseinrichtungen (20, 30, 40; 120, 130, 140) jeweils Korrektur-Mittel zur Berücksichtigung spezifischer laufzeitabhängiger Verzögerungs-Korrekturwerte (dD1, dD2, dD3) umfassen, so dass ab dem Auftreten eines Positionsdaten-Anforderungssignals (RQ) im Verlauf der Übertragung eines Datenwortes (DATA2) auf Seiten der Verarbeitungseinheit (10; 110) bis zur zeitgleichen Abarbeitung des Positionsdaten-Anforderungssignals (RQ) in allen Positionsmesseinrichtungen (20, 30, 40; 120, 130, 140) die jeweils gleiche Verzögerungszeit (TL) resultiert, wobei in die Verzögerungszeit (TL) neben dem laufzeitabhängigen Verzögerungs-Korrekturwert (dD1, dD2, dD3) ferner eine zeitliche Lageinformation (dTJ) bzgl. der relativen zeitlichen Lage des Positionsdaten-Anforderungssignals (RQ) während der Übertragung des Datenwortes (DATA2) eingeht.

14. Vorrichtung nach Anspruch 13, wobei die Positionsmesseinrichtungen (20, 30, 40; 120, 130, 140) als Korrektur-Mittel jeweils Speicher (25, 35, 45; 125, 135, 145) umfassen, in denen der spezifische Verzögerungs-Korrekturwert (dD1, dD2, dD3) abgelegt ist.

15. Vorrichtung nach Anspruch 13, wobei die Positionsmesseinrichtungen (20, 30, 40; 120, 130, 140) jeweils Zwischenspeicher (21, 31, 41; 121, 131, 141) aufweisen, in denen während der Übertragung von Positionsdaten an die Verarbeitungseinheit (10, 110), die nach dem Eimerkettenprinzip erfolgt, eine Zwischenspeicherung der Positionsdaten erfolgt.

16. Vorrichtung nach Anspruch 13, wobei die Positionsmesseinrichtungen (20, 30, 40; 120, 130, 140) jeweils mindestens ein betätigbares Schaltelement (27, 37, 47; 127, 137, 147) aufweisen, über das die Signalübertragung durch die jeweilige Positionsmesseinrichtung (20, 30, 40; 120, 130, 140) unterbrechbar ist.

**Claims**

1.  A method for data transmission between a processing unit (10; 110) and a plurality of position measuring devices (20, 30, 40; 120, 130, 140), which are connected to one another in a line bus topology, wherein a specific running time dependent delay correction value (dD1, dD2, dD3) is in each case considered for each position measuring device (20, 30, 40; 120, 130, 140) for the isochronous execution of a position data request signal (RQ) so that, starting with the appearance of a position data request signal (RQ) on the side of the processing unit (10; 110) the same delay time (TL) results in each case during the course of the transmission of a data word (DATA2) up to the isochronous execution of the position data request signal (RQ) in all of the position measuring devices (20, 30 40; 120, 130, 140), wherein a chronological position information (dTJ) with reference to the relative chronological position of the position data request signal (RQ) enters into the delay time (TL) in addition to the running time dependent delay correction value (dD1, dD2, dD3) during the transmission of the data word (DATA2).

2.  The method according to claim 1, wherein the specific delay correction value (dD1, dD2, dD3) for the respective position measuring device (20, 30, 40; 120, 130, 140) is chosen as a function of the signal running time (dTK1, dTK2, dTK3) between the processing unit (10; 110) and the respective position measuring device (20, 30, 40; 120, 130, 140).

3.  The method according to claim 2, wherein the specific delay correction value (dD1, dD2, dD3) of each position measuring device (20, 30, 40; 120, 130, 140) is determined prior to the measuring operation in an initialization phase.

4.  The method according to claim 3, wherein the respective determined delay correction value (dD1, dD2, dD3) is stored in a memory (25, 35, 45; 125, 135, 145), which is assigned to the respective position measuring device (20, 30, 40; 120, 130, 140).

5.  The method according to claim 2, wherein the respective delay correction value (dD1, dD2, dD3) is determined as a function of all of the determined signal running times (dTK1, dTK2, dTK3) in such a manner that an isochronous execution of a position data request signal (RQ) is possible for all position measuring devices (20, 30, 40; 120, 130, 140).

6.  The method according to claim 1, wherein the delay time (TL) is additively comprised of the period for transmitting a defined minimum number of digital data words (DATA2, POS_Q, dTJ) and the appropriate period of the delay correction value (dD1, dD2, dD3).

7.  The method according to claim 1, wherein the transmission of data takes place in the line bus topology from the position measuring devices (20, 30, 40; 120, 130, 140) to the processing unit (10; 100) according to the bucket-brigade circuit principle.

8.  The method according to claim 1, wherein the determined position data are transmitted in the direction of the processing unit (10; 110) immediately after the execution of the position data request signal (RQ) in the position measuring devices (20, 30, 40; 120, 130, 140).

9.  The method according to claim 7 and 8, wherein an intermediate storage of the position data in temporary buffer stores (21, 31, 41; 121, 131, 141) of the individual position measuring devices (20, 30, 40; 120, 130, 140) takes place during the transmission of the position data.

10. A processing unit suitable for carrying out a method according to one of claims 1-9.

11. A position measuring device suitable for carrying out a method according to one of claims 1-9.

12. A system consisting of a processing unit and a plurality of position measuring devices connected thereto in a line bus topology, suitable for carrying out a method according to one of claims 1-9.

13. A device for data transmission between a processing unit (10; 110) and a plurality of position measuring devices (20, 30, 40; 120, 130, 140), which are connected to one another in a line bus topology, wherein the position measuring devices (20, 30, 40; 120, 130, 140) in each case comprise correction means for considering specific running time dependent delay correction values (dD1, dD2, dD3) for an isochronous execution of a position data request signal (RQ) so that, starting at the appearance of a position data request signal (RQ) on the side of the processing unit (10; 110) the same delay time (TL) results in each case during the course of the transmission of a data word (DATA2) up to the isochronous execution of the position data request signal (RQ) in all position measuring devices (20, 30 40; 120, 130, 140), wherein a chronological position information (dTJ) with reference to the relative chronological position of the position data request signal (RQ) enters into the delay time (TL) in addition to the running time dependent delay correction value (dD1, dD2, dD3) during the transmission of the data word (DATA2).

**14.** The device according to claim 13, wherein the position measuring devices (20, 30, 40; 120, 130, 140) as correction means in each case comprise memories (25, 35, 45; 125, 135, 145), in which the specific delay correction value (dD1, dD2, dD3) is stored.

**15.** The device according to claim 13, wherein the position measuring devices (20, 30 40; 120, 130, 140) in each case encompass temporary buffer stores (21, 31, 41; 121, 131, 141), in which an intermediate storage of the position data takes place during the transmission of position data to the processing unit (10, 110) according to the bucket-brigade circuit principle.

**16.** The device according to claim 13, wherein the position measuring devices (20, 30, 40; 120, 130, 140) in each case encompass at least one actuatable control element (27, 37, 47; 127, 137, 147) via which the signal transmission can be interrupted by means of the respective position measuring device (20, 30, 40; 120, 130, 140).

**Revendications**

**1.** Procédé pour la transmission de données entre une unité de traitement (10; 110) et plusieurs dispositifs de mesure de position (20, 30, 40; 120, 130, 140), reliés entre eux dans une topologie en bus, une valeur de correction de retard (dD1, dD2, dD3) spécifique et dépendante du temps de parcours étant prise en compte pour chacun des dispositifs de mesure de position (20, 30, 40; 120, 130, 140), pour le traitement simultané d'un signal de demande de données de position (RQ) dans les dispositifs de mesure de position (20, 30, 40; 120, 130, 140), de façon à ce que le même temps de retard (TL) se produise à chaque fois, à partir de l'apparition d'un signal de demande de données de position (RQ) du côté de l'unité de traitement (10; 110) au cours de la transmission d'un mot contenant des données (DATA2), jusqu'au traitement simultané du signal de demande de données de position (RQ) dans tous les dispositifs de mesure de position (20, 30, 40; 120, 130, 140), une information de position temporelle (dTJ) concernant la position temporelle relative du signal de demande de données de position (RQ) pendant la transmission du mot contenant des données (DATA2) entrant par ailleurs dans le temps de retard (TL), en plus de la valeur de correction de retard (dD1, dD2, dD3) dépendante du temps de parcours.

**2.** Procédé selon la revendication 1, dans lequel la valeur de correction de retard (dD1, dD2, dD3) spécifique pour le dispositif de mesure de position (20, 30, 40; 120, 130, 140) concerné est choisie en fonction du temps de parcours du signal (dTK1, dTK2, dTK3) entre l'unité de traitement (10; 110) et le dispositif de mesure de position (20, 30, 40; 120, 130, 140) concerné.

**3.** Procédé selon la revendication 2, dans lequel la valeur de correction de retard (dD1, dD2, dD3) spécifique de chaque dispositif de mesure de position (20, 30, 40; 120, 130, 140) est communiqué avant le mesurage, au cours d'une phase d'initialisation.

**4.** Procédé selon la revendication 3, dans lequel chaque valeur de correction de retard (dD1, dD2, dD3) est stockée dans une mémoire (25, 35, 45; 125, 135, 145) attribuée respectivement à chacun des dispositifs de mesure de position (20, 30, 40; 120, 130, 140).

**5.** Procédé selon la revendication 2, dans lequel chacune des valeurs de correction de retard (dD1, dD2, dD3) est déterminée en fonction de tous les temps de parcours de signal (dTK1, dTK2, dTK3) communiqués, de telle manière qu'un traitement simultané d'un signal de demande de données de position (RQ) est possible pour tous les dispositifs de mesure de position (20, 30, 40; 120, 130, 140).

**6.** Procédé selon la revendication 1, dans lequel le temps de retard (TL) se compose de façon cumulative de la durée nécessaire à la transmission d'un nombre défini et minimal de mots contenant des données digitales (DATA2, POS_Q, dTJ) et de la durée correspondante de la valeur de correction de retard (dD1, dD2, dD3).

**7.** Procédé selon la revendication 1, dans lequel la transmission de données dans la topologie en bus, entre les dispositifs de mesure de position (20, 30, 40; 120, 130, 140) et l'unité de traitement (10; 110) est réalisée selon le principe de transfert en chaîne.

**8.** Procédé selon la revendication 1, dans lequel les données de position communiquées sont transmises en direction de l'unité de traitement (10; 110) directement après le traitement du signal de demande de données de position (RQ) dans les dispositifs de mesure de position (20, 30, 40; 120, 130, 140).

**9.** Procédé selon l'une des revendications 7 ou 8, dans lequel un stockage intermédiaire des données de position dans des mémoires intermédiaires (21, 31, 41; 121, 131, 141) des différents dispositifs de mesure de position (20, 30, 40; 120, 130, 140) a lieu pendant la transmission des données de position.

**10.** Unité de traitement adaptée pour la mise en oeuvre d'un procédé selon l'une des revendications 1 à 9.

**11.** Dispositif de mesure de position adapté pour la mise en oeuvre d'un procédé selon l'une des revendications 1 à 9.

**12.** Système constitué d'une unité de traitement et de plusieurs dispositifs de mesure de position, reliés entre eux dans une topologie en bus, adapté pour la mise en oeuvre d'un procédé selon l'une des revendications 1 à 9.

**13.** Dispositif pour la transmission de données entre une unité de traitement (10; 110) et plusieurs dispositifs de mesure de position (20, 30, 40; 120, 130, 140), reliés entre eux dans une topologie en bus, les dispositifs de mesure de position (20, 30, 40; 120, 130, 140) comprenant chacun des moyens de correction pour la prise en compte de valeurs de correction de retard (dD1, dD2, dD3) spécifiques et dépendantes du temps de parcours, en vue du traitement simultané d'un signal de demande de données de position (RQ), de façon à ce que le même temps de retard (TL) se produise à chaque fois, à partir de l'apparition d'un signal de demande de données de position (RQ) du côté de l'unité de traitement (10; 110) au cours de la transmission d'un mot contenant des données (DATA2), jusqu'au traitement simultané du signal de demande de données de position (RQ) dans tous les dispositifs de mesure de position (20, 30, 40; 120, 130, 140), une information de position temporelle (dTJ) concernant la position temporelle relative du signal de demande de données de position (RQ) pendant la transmission du mot contenant des données (DATA2) entrant par ailleurs dans le temps de retard (TL), en plus de la valeur de correction de retard (dD1, dD2, dD3) dépendante du temps de parcours.

**14.** Dispositif selon la revendication 13, dans lequel chacun des dispositifs de mesure de position (20, 30, 40; 120, 130, 140) comprend une mémoire (25, 35, 45; 125, 135, 145) en tant que moyen de correction, dans laquelle est stockée la valeur de correction de retard (dD1, dD2, dD3) spécifique correspondante.

**15.** Dispositif selon la revendication 13, dans lequel les dispositifs de mesure de position (20, 30, 40; 120, 130, 140) comportent chacun une mémoire intermédiaire (21, 31, 41; 121, 131, 141) destinée au stockage intermédiaire des données de position pendant la transmission de données de position vers l'unité de traitement (10; 110), effectuée selon le principe de chaîne.

**16.** Dispositif selon la revendication 13, dans lequel les dispositifs de mesure de position (20, 30, 40; 120, 130, 140) comportent chacun au moins un élément de commutation actionnable (27, 37, 47; 127, 137, 147), au moyen duquel la transmission du signal peut être interrompue par chacun des dispositifs de mesure de position (20, 30, 40; 120, 130, 140).

FIG. 1

FIG. 2

FIG. 3a

RQ

010

| DATA1 | DATA2 | POSRQ | dTJ | DATA3 | DATA4 |

dTJ
004

FIG. 3b

| DATA1 | DATA2 | POSRQ | dTJ | DATA3 | DATA4 |

dTK1
002

dTJ
004

dD1
004

TL=035=konstant

$t_0$  $t_1$  $t_4$  $t_{RQ}$  $t_5$  $t_6$  $t_S$  $t$

FIG. 3c

| DATA1 | DATA2 | POSRQ | dTJ | DATA3 | DATA4 |

dTK2
004

dTJ
004

dD2
002

TL=035=konstant

$t_0$  $t_2$  $t_{RQ}$  $t_S$  $t$

FIG. 3d

| DATA1 | DATA2 | POSRQ | dTJ | DATA3 | DATA4 |

dTK3
006

dTJ
004

dD3
000

TL=035=konstant

$t_0$  $t_3$  $t_{RQ}$  $t_S$  $t$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10030358 A1
- DE 10030357 A1
- US 4982185 A
- DE 10162735